# EUROPÄISCHE PATENTSCHRIFT

(11) **EP 2 488 288 B1**
(45) Veröffentlichungstag und Bekanntmachung des Hinweises auf die Patenterteilung: **29.04.2015**
(21) Anmeldenummer: 10762908.1
(22) Anmeldetag: 30.09.2010
(51) Int. Cl.: B01F 7/00, B01F 13/00, A47J 43/07, A47J 43/10

(54) **RÜHRVORRICHTUNG FÜR EIN ELEKTRISCHES KÜCHENGERÄT**
STIRRING DEVICE FOR AN ELECTRICAL KITCHEN APPLIANCE
DISPOSITIF MÉLANGEUR POUR UN APPAREIL ÉLECTROMÉNAGER DE PRÉPARATION CULINAIRE

(30) Priorität: 14.10.2009 DE 102009045706
(43) Veröffentlichungstag der Anmeldung: 22.08.2012
(73) Patentinhaber: BSH Hausgeräte GmbH, 81739 München (DE)
(72) Erfinder: SEMEJA, Uros, 3327 Smartno ob Paki (SI); GOLAVSEK, Samo, 3312 Prebold (SI); DANIJEL, Roman, 3312 Ljubno (SI)
(86) Internationale Anmeldenummer: PCT/EP2010/064554
(87) Internationale Veröffentlichungsnummer: WO 2011/045187

(56) Entgegenhaltungen:
- WO-A1-2005/089606
- DE-A1- 1 429 978
- GB-A- 205 611
- GB-A- 397 448
- US-A- 1 966 352
- US-A- 2 599 070
- US-B1- 6 264 356

## Beschreibung

### Hintergrund der Erfindung

Die vorliegende Erfindung betrifft eine Rührvorrichtung, insbesondere Quirl, für ein elektrisches Küchengerät, umfassend einen Antriebsschaft und mindestens einen ersten in sich geschlossener bogenförmigen ausgebildeter Bügel gemäß dem Oberbegriff des Anspruchs 1.

### Stand der Technik

Die EP 0 410 527 B1 offenbart einen Quirl für eine Küchenmaschine, welcher eine gute Schlag- und Mischwirkung auf das zu verarbeitende Mischgut aufweist. Hierzu werden mehr als vier bogenförmige Bügel vorgesehen, welche an einem Schaft ausgebildet sind. Die Bügel weisen an ihrem jeweiligen Ende eine Verbindung zu einem Ring, welcher radial um den Schaft verläuft. Die Bügel sind in Umfangsrichtung des umlaufenden Ringes symmetrisch verteilt. Um den Schlageffekt und die Mischwirkung zu verbessern, lehrt die EP 0 410 527 B1 die Verteilung einer Vielzahl von bogenförmigen Bügeln entlang des Ringes, welche abwechselnd um den Ring in axialer Richtung verteilt sind.

Auch bekannt sind Rührvorrichtungen für elektromotorische Küchengeräte, welche im Bereich des Mischguts bandförmig ausgebildet sind, welches die Zerkleinerungskraft der Vorrichtung verbessert. Die 1 429 978 A1 offenbart eine Rührvorrichtung entsprechend dem Oberbegriff des Anspruchs 1 und offenbart ebenfalls eine Rührvorrichtung, welche einen besonderen Bereich aufweist, mit welchem das zu bearbeitende Mischgut von dem Schüsselboden angehoben werden kann, so dass eine starke lufteintreibende Schlagwirkung erreicht werden kann.

Weitere Rührvorrichtungen sind in der GB 397 448 A und der US 397 448 offenbart, bei welchem bandförmige Drahtbügel und Mittel zum Verbessern des Drehmomentes zum Einsatz kommen.

Bei all den bekannten Konstruktionen aus dem Stand der Technik wird aber nicht immer ein zufriedenstellender Effekt erreicht. So wird beispielsweise die bandförmige Rührvorrichtung das Mischgut allzu scharf das Mischgut anschlagen, so dass die gewünschte Wirkung nicht immer erreicht werden kann. Die Verwendung einer Vielzahl von bogenförmigen Bügeln ist ebenfalls nicht universell einsetzbar und weist ferner den Nachteil der aufwendigen Herstellung.

### Der Erfindung zugrundeliegende Aufgabe

Der Erfindung liegt die Aufgabe zugrunde, eine effektive Rührvorrichtung bereitzustellen, welche eine verbesserte Wirkfläche auf das Mischgut aufweist, und kostengünstig in der Herstellung ist.

### Erfindungsgemäße Lösung

Die Lösung der gestellten Aufgabe gelingt durch eine Rührvorrichtung mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Es wird eine Rührvorrichtung entsprechend Anspruch 1, insbesondere Quirl, für ein elektrisches Küchengerät zum Verarbeiten von Mischgut bereitgestellt. Die Rührvorrichtung umfasst einen Antriebsschaft und einen ersten in sich geschlossenen bogenförmigen Bügel, welcher an einem Ende des Antriebsschaftes angeordnet ist, wobei der erste Bügel in seiner Länge zumindest abschnittsweise einen konstanten Querschnitt aufweist, dadurch gekennzeichnet, dass der erste Bügel mindestens eine Anformung als Verdickung, aufweist, welche dergestalt ausgebildet ist, dass die Wirkfläche auf das zu verarbeitende Mischgut vergrößert wird. Die Anformungen bewirken eine Erhöhung der effektiven Fläche die auf das Mischgut einwirkt, so dass Lebensmittel schonend und schnell die gewünschte Konsistenz erreichen. Im Falle des Steifschlagens von Mischgut, beispielsweise Eiweiß oder Sahne, wird mittels der erfindungsgemäßen Anformungen mehr Luft in das Mischgut eingeschlagen, welches zu einer noch schnelleren Verarbeitung führt.

### Ausgestaltung der Erfindung

Die Rührvorrichtung weist einen zweiten in sich geschlossenen bogenförmigen Bügel zum Verarbeiten von Mischgut auf, welcher den ersten bogenförmigen Bügel kreuzt, wobei der zweite Bügel in seiner Länge zumindest abschnittsweise einen konstanten Querschnitt aufweist und an dem Ende des Antriebsschaftes angeordnet ist, wobei der zweite Bügel mindestens eine Anformung als Verdickung aufweist, welche dergestalt ausgebildet ist, dass die Wirkfläche auf das zu verarbeitende Mischgut vergrößert wird. Durch den Einsatz eines weiteren Bügels werden die Rührergebnisse weiter verbessert, da die effektive Fläche, die auf das Mischgut einwirkt, weiter erhöht wird.

Erfindungsgemäß bevorzugt ist die Anformung, insbesondere die Verdickung, als Mittel zum Vergrößern eines Querschnitts des Bügels ausgebildet ist. Die Bügel weisen entlang deren Länge zumindest abschnittsweise einen konstanten Querschnitt und die Anformungen sind so ausgebildet, dass diese den Querschnitt in dem Abschnitt, wo sie angeformt sind, vergrößern. Somit wird die Wirkfläche auf das zu verarbeitende Mischgut effektiv vergrößert. Falls die Bügel drahtförmig ausgebildet sind, können diese in deren Länge einen konstanten und kreisförmigen Querschnitt aufweisen, wobei die Anformungen abschnittsweise entlang der Länge der Bügel den Querschnitt als Verdickung bzw. Anformung vergrößern.

Bevorzugt ist die Anformung, insbesondere die Verdickung symmetrisch zu einer Rotationsachse des Antriebsschaftes jeweils in einem Wirkbereich auf dem jeweiligen Bügel angeordnet. Durch diese bevorzugte Anordnung der Anformungen wird eine einfache Herstellung gesichert und die Wirkung auf das zu rührende Mischgut wird noch weiter verbessert. Der symmetrische Aufbau wirkt zusätzlich positiv auf die Antriebseinheit eines elektrisch angetriebenen Handrührer, da somit keine störenden Unwuchten entstehen können.

Erfindungsgemäß ist die Anformung als Verdickung kugelförmig ausgebildet. Die Kugelform der Anformungen ist leicht zu reinigen und die effektive Wirkfläche der Rührvorrichtung wird durch diese vorteilhafte Form besonders erhöht.

Zweckmäßigerweise ist der Wirkbereich der Bügel im Betrieb der Rührvorrichtung mit dem Mischgut in Kontakt. Folglich können effektiv und schnell Lebensmittel verarbeitet werden.

In einer bevorzugten Ausführungsform der Erfindung sind die Bügel steif ausgebildet. Die steife bzw. nicht-verformbare Ausbildung der Bügel erlaubt die Verarbeitung von zähem Mischgut, wie beispielsweise Teig oder ähnliches. Somit ist die Rührvorrichtung universell einsetzbar.

Weiterhin sind die Bügel drahtförmig ausgebildet. Die Verwendung von Drähten, insbesondere aus Metalllegierungen hergestellten Drähten, stellt eine kostengünstige und leicht zu reinigende Rührvorrichtung bereit.

Es ist bevorzugt, dass die Anformungen, insbesondere die Verdickungen, abnehmbar und/oder ersetzbar ausgebildet sind. Somit können unterschiedliche Anformungen für unterschiedliche Zwecke eingesetzt werden.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
Fig. 1 eine perspektivische Ansicht einer Rührvorrichtung gemäß der vorliegenden Erfindung; und
Fig. 2 eine Detailansicht der Rührvorrichtung.

### Ausführliche Beschreibung anhand eines Ausführungsbeispiels

Bei der nachfolgenden Beschreibung der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Die Rührvorrichtung kann bei Handrührgeräten eingesetzt werden. Ein Handrührer weist üblicherweise zwei Rührvorrichtungen bzw. Quirle auf, deren Bügel in entgegen gesetzten Richtungen durch einen elektrischen Motor angetrieben werden. Es ist jedoch ebenfalls denkbar, dass die Rührvorrichtung gemäß der vorliegenden Erfindung bei einer Küchenmaschine Einsatz findet, welche im Gegensatz zum Handrührer nicht direkt in der Hand haltbar ist. Eine weitere Möglichkeit ist die Anwendung der Erfindung für einen Stabmixer oder eine Küchenmaschine.

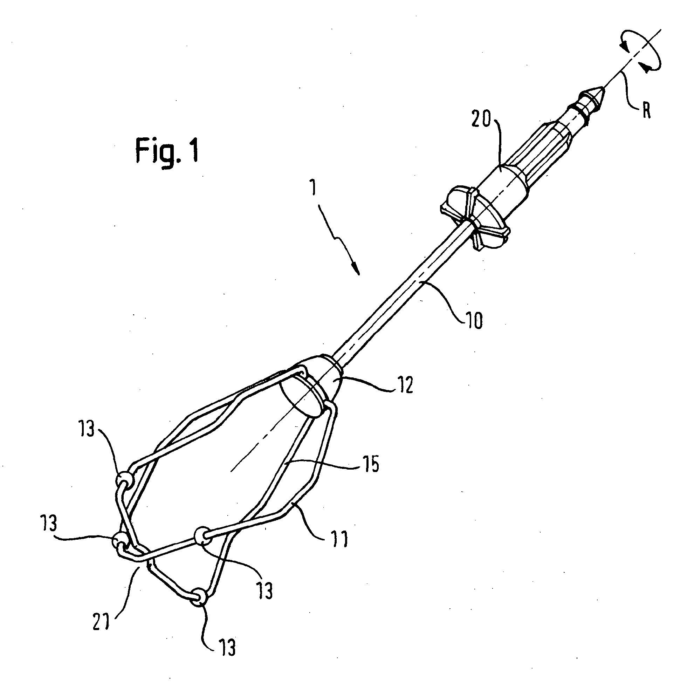

Fig. 1 zeigt eine Ausführungsform der Rührvorrichtung gemäß der vorliegenden Erfindung für ein elektrisches bzw. elektromotorisches Handrührgerät. Die Rührvorrichtung bzw. der Quirl 1 wird rotierend von einem Elektromotors des Handrührgerätes bzw. des Handmixers angetrieben. Dazu weist die Rührvorrichtung 1 eine Kupplung 20 auf, die am oberen Ende eines Antriebsschaftes 10 angeordnet ist. Die Kupplung 20 wirkt mit einer weiteren Kupplung, welche im Handrührgerät angeordnet ist zusammen, so dass der Elektromotor die Rührvorrichtung 1 antreiben kann. Das Kupplungssystem treibt somit den Antriebsschaft 10 rotierend an. Bevorzugt ist der Antriebsschaft 10 aus einem metallischen Material hergestellt, welches eine hohe Steifigkeit und eine leichte Herstellbarkeit gewährleistet. Es ist jedoch auch denkbar, dass die gesamte Rührvorrichtung 1 samt Antriebsschaft 10 einstückig aus Kunststoff oder einem anderen geeigneten Material hergestellt sind.

Der Antriebsschaft 10 weist an seinem Ende 12 einen ersten und einen zweiten bogenförmigen Bügel 11 und 15, die in sich geschlossen sind und aus dem Ende 12 des Antriebsschaftes herausragen. Die Bügel 11, 15 weisen in deren Länge zumindest teilweise einen konstanten Querschnitt auf. Die Bügel 11 und 15 können aus einem metallischen Material bestehen und sind drahtförmig ausgebildet. Durch die Wahl des Materials kann gewährleistet werden, dass die Bügel 11, 15 im Wesentlichen steif sind aber jedoch auch biegeelastisch sein können. Das Material, insbesondere das drahtförmige Material muss so ausgewählt werden, dass keine wesentlichen Verformungen der Rührvorrichtung 1 im Betrieb entstehen. Das Ende 12 des Antriebsschaftes 10 ist mit den Bügeln 11 und 15 ebenfalls starr und sicher verbunden.

Die Verbindung im Bereich des Endes 12 des Antriebsschaftes 10 kann unterschiedliche Ausbildungen aufweisen. So ist es beispielsweise denkbar, dass die Bügel 11 und 15 mit dem Antriebsschaft 10 einstückig hergestellt sind, jedoch eine feste Kupplung oder eine Löt- bzw. Schweißstelle ist ebenfalls realisierbar. Die Verbindung sollte jedoch dergestalt sein, dass im Betrieb die Bügel 11 und 15 fest mit dem Ende 12 des Antriebsschaftes 10 verbunden sind, um entsprechend auf das Mischgut oder die Lebensmittel zu wirken.

Die Bügel 11 und 15 sind drahtförmig ausgebildet und sie bestehen aus einem metallischen Draht. Die Bügel 11 und 15 treten aus dem Ende 12 des Antriebsschaftes 10 heraus und spannen zwei Flächen auf, welche bevorzugt rechtwinklig aufeinander treffen. Dadurch weisen die zwei Bügel 11 und 15 einen Kreuzpunkt 21 auf, in welchem diese beispielsweise zusammengelötet sein können. Es ist jedoch ebenfalls möglich, dass die zwei Bügel keinen Kontaktpunkt 21 aufweisen, so dass der Lötvorgang bei der Herstellung entfällt. Auch ist es denkbar, dass die zwei drahtförmigen Bügel 11 und 15 im Kontaktpunkt 21 ineinander verhakt oder gewickelt werden können. Ferner ist es ebenfalls denkbar, dass die Rührvorrichtung weitere Bügel 11, 15 aufweist welche symmetrisch aus dem Ende 12 des Antriebsschaftes 10 herausragen und eine Vielzahl an sich überkreuzenden Ebenen definieren.

Die drahtförmigen metallischen Bügel 11, 15 weisen im unteren Bereich, d.h. in deren jeweiligen Wirkbereich 16, 17, eine Vielzahl an Anformungen 13. Die Anformungen 13 sind kugelförmig ausgebildet und entweder ebenfalls aus einem metallischen Material bestehen oder auch aus Kunststoff. Auch andere Materialien sind vorstellbar. Ebenfalls möglich ist die einstückige Ausbildung der Anformungen 13 zusammen mit den Bügeln 11 und 15. In diesem Fall könnten diese beispielsweise mit Hilfe eines Gießprozesses in einem Herstellungsschritt produziert werden. Auch ein Anlöten der kugelförmigen Anformungen 13 an den Bügeln 11 und 15 in einem separaten Herstellungsschritt ist implementierbar bzw. herstellbar.

Gemäß dieser beispielhaften Ausführungsform der vorliegenden Rührvorrichtung 1 sind die Anformungen 13 im unteren Drittel, entsprechend dem ersten und zweiten Wirkbereich 17, 18, der Bügel 11 und 15 angeordnet. Dieses untere Drittel ist auch der Bereich, der im Wesentlichen mit dem Mischgut (d.h. Lebensmittel) dauerhaft im Kontakt steht. Durch die Ausbildung oder das Anbringen der Anformungen 13 auf den drahtförmigen Bügeln 11 und 15 kann folglich der Wirkbereich 14 auf das Mischgut verbessert d.h. vergrößert werden. Demnach kann auch die Schlagwirkung der Rührvorrichtung 1 verbessert werden, da mit Hilfe der Anordnungen 13 besser Luft in das Mischgut eingeschlagen bzw. eingearbeitet werden kann. Beispielsweise kann mit dieser Rührvorrichtung Eiweiß viel schneller steif geschlagen werden, als mit herkömmlichen Rührvorrichtungen. Die Bügel 11 bzw. 15 werden steif aus einem drahtförmigen metallischen Material gefertigt, so dass deren Form während der Rotation im Betrieb des Handrührgeräts im Wesentlichen unverändert bleibt. So wird effektiv das gesamte Drehmoment des Elektromotors auf das Mischgut übertragen, ohne dass die Bügel 11 und 15 eine elastische Verformung bewirkt durch Zentrifugalkräfte erfahren. Durch die Anformungen 13 wird somit erfindungsgemäß der Wirkbereich 14 vorteilhaft vergrößert. Nun kann neben der Fläche des drahtförmigen Bügels ebenfalls der Wirkbereich 14 der jeweiligen Anformungen auf das Mischgut wirken, welches die Qualität und Verarbeitungsgeschwindigkeit verbessert.

Um die Zirkulation des Mischguts während der Verarbeitung durch das elektromotorische Handrührgerät zu verbessern weisen die Bügel 11 und 15 jeweils ein Paar schräge Abschnitte bzw. Schrägabschnitte 18 und 19, welche in der Rotation der Rührvorrichtung wie eine Schraube bzw. Spirale wirken. Die Drahtbügel 11 und 14 bilden im Wesentlichen eine rechteckartige Form aus, und die schrägen Bereiche (oder Abschnitte) 18, 19 sind gegenüber der Achse R der Rührvorrichtung 1 entgegengesetzt geneigt. Die Achse R wird definiert durch den Antriebsschaft 10. Durch die schrägen bzw. geneigten Abschnitte 19, 20 wird eine Hubwirkung auf das Gut erzielt und darüber hinaus wird die Schlagwirkung verbessert.

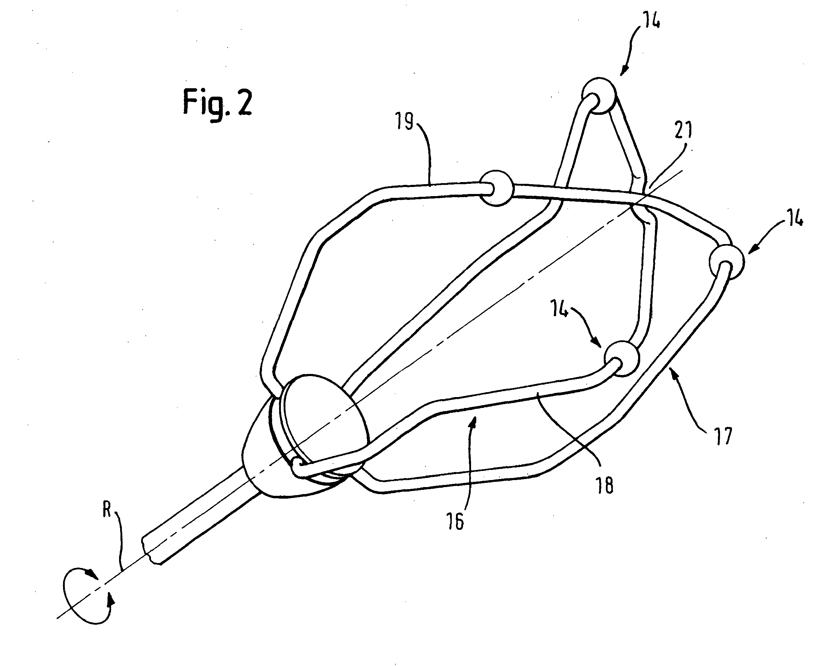

Fig. 2 zeigt die eine Detailansicht der Rührvorrichtung aus der Fig. 1. Gemäß dieser Ausführungsform der Rührvorrichtung 1 sind die zwei Bügel 11 und 15 in einem Punkt 21 kontaktiert und durch eine Lötstelle gesichert. Die Anformungen 13 sind im unteren Bereich angeordnet, so dass im Betrieb das Mischgut dauerhaft während des Bearbeitungsvorganges durch die Wirkflächen 14 verarbeitet wird. Die Anformungen 13 des ersten drahtförmigen Bügels sind im Wesentlichen in einem horizontalen Abschnitt des rechteckigen Bügels 11 angeordnet. Der horizontale Abschnitt entspricht dem Abschnitt, welcher im Wesentlichen parallel zu einem Schüsselboden während des Betriebes der Rührvorrichtung 1 definiert wird. Im Gegensatz dazu sind die Anformungen 13 auf dem zweiten Bügel 15 in einem vertikalen Abschnitt angeordnet werden, der senkrecht zum Schüsselboden steht. Durch die Ausbildung der oben erwähnten schrägen Abschnitten 18, 19 können die senkrecht stehenden Abschnitte ferner einen geneigten Winkel zum Schüsselboden aufweisen. Dadurch dass die Anformungen 13 des zweiten Bügels 13 jedoch im vertikalen oder geneigten Bereich angeordnet sind, erfahren sie eine schnellere Rotationsgeschwindigkeit, da der Radius zur Rotationsachse R vergrößert ist. Folglich kann die Wirkfläche 14 dieser Anformungen 13 mit einer erhöhten Verarbeitungsgeschwindigkeit eingesetzt werden.

Die Rührvorrichtung 1 kann beispielsweise in ein Handrührgerät eingesetzt werden, jedoch können Werkzeuge einer Küchenmaschine ebenfalls mit den erfindungsgemäßen Anformungen 13 versehen werden.

Vorteilhafterweise werden die Anformüngen bzw. Verdickungen 13 auf die metallischen Drahtbügel 11, 15 verlötet. Im Falle einer Verwendung kugelförmiger Anformungen 13, können diese geeignete Bohrungen aufweisen, durch welche entsprechend die Drahtbügel 11, 15 hindurchgeführt werden, um anschließend mit diesen verlötet oder in einem anderen Verfahren verbunden zu werden.

### BEZUGSZEICHENLISTE

- 1: Rührvorrichtung
- 10: Antriebsschaft
- 11: erster Bügel
- 12: Antriebsschaftsende
- 13: Verdickungen bzw. Anformungen
- 14: Wirkfläche
- 15: zweiter Bügel
- 16: erster Wirkbereich
- 17: zweiter Wirkbereich
- 18,19: Schrägabschnitte
- 20: Kupplung
- 21: Kreuzpunkt bzw. Kontaktpunkt

## Patentansprüche

1. Rührvorrichtung (1), insbesondere Quirl, für ein elektrisches Küchengerät zum Verarbeiten von Mischgut, umfassend einen Antriebsschaft (10) und einen ersten in sich geschlossenen bogenförmigen Bügel (11), welcher an einem Ende (12) des Antriebsschaftes (10) angeordnet ist, und einen zweiten in sich geschlossenen bogenförmigen Bügel (15) zum Verarbeiten von Mischgut, welcher den ersten bogenförmiger Bügel (11) kreuzt und an dem Ende (12) des Antriebsschaftes (10) angeordnet ist, wobei die Bügel (11, 15) drahtförmig ausgebildet sind, wobei die Bügel (11, 15) rechteckig ausgebildet sind, **dadurch gekennzeichnet, dass** der erste Bügel (11) als Verdickungen ausgebildete Anformungen (13) aufweist, welche dergestalt ausgebildet sind, dass die Wirkfläche (14) auf das zu verarbeitende Mischgut vergrößert wird, wobei der zweite Bügel (14) als Verdickungen ausgebildete Anformungen (13) aufweist, welche dergestalt ausgebildet sind, dass die Wirkfläche (14) auf das zu verarbeitende Mischgut vergrößert wird, wobei die als Verdickungen ausgebildete Anformungen (13) kugelförmig ausgebildet und in einem unteren Bereich der Bügel (11, 15) angeordnet sind, wobei die Anformungen (13) des ersten Bügels (11) im Wesentlichen in einem horizontalen im Wesentlichen parallel zu einem Schüsselboden während des Betriebs der Rührvorrichtung (1) stehenden Abschnitt des Bügels (11) angeordnet sind, und wobei die Anformungen des zweiten Bügels (15) in einem vertikalen im Wesentlichen senkrecht zum Schüsselboden während des Betriebs der Rührvorrichtung (1) stehenden Abschnitt des Bügels (15) angeordnet sind.

2. Rührvorrichtung nach Anspruch 1 oder 2, **dadurch gekennzeichnet, dass** die Anformung (13), insbesondere die Verdickung (13), als Mittel zum Vergrößern eines Querschnitts des Bügels (13, 15) ausgebildet ist.

3. Rührvorrichtung nach einem der vorhergehenden Ansprüche, **dadurch gekennzeichnet, dass** die Anformungen (13), insbesondere die Verdickungen (13) symmetrisch zu einer Rotationsachse (R) des Antriebsschaftes (10) jeweils in einem Wirkbereich (16, 17) auf dem jeweiligen Bügel (11, 15) angeordnet sind.

4. Rührvorrichtung nach Anspruch 3, **dadurch gekennzeichnet, dass** der Wirkbereich (16, 17) der Bügel (11, 15) derart ausgebildet ist, um im Betrieb der Rührvorrichtung (1) mit dem Mischgut in Kontakt zu stehen.

5. Rührvorrichtung nach einem der vorhergehenden Ansprüche, **dadurch gekennzeichnet, dass** die Bügel (11, 15) steif ausgebildet sind.

6. Rührvorrichtung nach einem der vorhergehenden Ansprüche, **dadurch gekennzeichnet, dass** die Bügel (11, 15) aus einem metallischen Material hergestellt sind.

7. Rührvorrichtung nach einem der vorhergehenden Ansprüche, **dadurch gekennzeichnet, dass** die Anformungen (13), insbesondere die Verdickungen (13) abnehmbar und/oder ersetzbar ausgebildet sind.

8. Elektromotorisches Handrührgerät mit mindestens einer Rührvorrichtung nach einem der vorhergehenden Ansprüche 1 bis 7, wobei das Handrührgerät eine elektrische Antriebseinrichtung aufweist, um die mindestens eine Rührvorrichtung (1) rotierend anzutreiben.

## Claims

1. Stirring device (1), in particular a whisk, for an electrical kitchen appliance for processing mixtures, including a drive shaft (10) and a first arched, self-contained hoop (11) which is arranged on an end (12) of the drive shaft (10), and a second, arched, self-contained hoop (15) for processing mixtures, which intersects the first arched hoop (11) and is arranged on the end (12) of the drive shaft (10), wherein the hoops (11, 15) are embodied to be wire-like, wherein the hoops (11, 15) are embodied to be rectangular, **characterised in that** the first hoop (11) comprises moulded-on elements (13) embodied as bulges, which are embodied such that the active surface (14) acting upon the mixture to be processed is enlarged, wherein the second hoop (14) comprises moulded-on elements (13) embodied as bulges, which are embodied such that the active surface (14) acting upon the mixture to be processed is enlarged, wherein the moulded-on elements (13) embodied as bulges are embodied to be spherical and are arranged in a lower region of the hoops (11, 15), wherein the moulded-on elements (13) of the first hoop (11) are essentially arranged in a horizontal segment of the hoop (11) which is essentially in parallel with the bottom of a basin during operation of the stirring device (1), and wherein the moulded-on elements of the second hoop (15) are arranged in a vertical segment of the hoop (15) which is essentially at right angles to the bottom of the basin during operation of the stirring device (1).

2. Stirring device according to claim 1 or 2, **characterised in that** the moulded-on element (13), in particular the bulge (13), is embodied as a means of enlarging a cross-section of the hoop (13, 15).

3. Stirring device according to one of the preceding claims, **characterised in that** the moulded-on elements (13), in particular the bulges (13) are arranged in a symmetrical fashion with respect to the axis of rotation (R) of the drive shaft (10) in an active area (16, 17) on the respective hoop (11, 15) in each instance.

4. Stirring device according to claim 3, **characterised in that** the active area (16, 17) of the hoop (11,15) is embodied to be in contact with the mixture during operation of the stirring device (1).

5. Stirring device according to one of the preceding claims, **characterised in that** the hoop (11, 15) is embodied to be rigid.

6. Stirring device according to one of the preceding claims, **characterised in that** the hoops (11, 15) are manufactured from a metallic material.

7. Stirring device according to one of the preceding claims, **characterised in that** the moulded-on elements (13), in particular the bulges (13), are embodied to be removable and/or replaceable.

8. Electric-motor-driven hand mixing device having at least one stirring device according to one of the preceding claims 1 to 7, wherein the hand mixing device comprises an electrical drive facility in order to rotationally drive at least one stirring device (1).

## Revendications

1. Dispositif malaxeur (1), en particulier batteur, pour un appareil électrique de cuisine servant à préparer un mélange, comprenant un arbre d'entraînement (10) et un premier fouet (11) en forme d'arc refermé sur lui-même, qui est agencé au niveau d'une extrémité (12) de l'arbre d'entraînement (10), et un second fouet (15) en forme d'arc refermé sur lui-même servant à préparer un mélange, qui croise le premier fouet (11) en forme d'arc et est agencé au niveau de l'extrémité (12) de l'arbre d'entraînement (10), les fouets (11, 15) étant réalisés filiformes, les fouets (11, 15) étant réalisés rectangulaires, **caractérisé en ce que** le premier fouet (11) présente des appendices (13) réalisés sous forme de surépaisseurs, qui sont réalisés de telle sorte que la surface utile (14) agissant sur le mélange à préparer est augmentée, et le second fouet (14) présente des appendices (13) réalisés sous forme de surépaisseurs, qui sont réalisés de telle sorte que la surface utile (14) agissant sur le mélange à préparer est augmentée, les appendices (13) réalisés sous forme de surépaisseurs étant réalisés sous une forme sphérique et étant agencés dans un secteur inférieur des fouets (11, 15), les appendices (13) du premier fouet (11) étant agencés essentiellement dans une section du fouet (11) horizontale essentiellement parallèle à un fond de cuve pendant le fonctionnement du dispositif malaxeur (1), et les appendices du second fouet (15) étant agencés dans une section verticale du fouet (15) essentiellement perpendiculaire au fond de cuve pendant le fonctionnement du dispositif malaxeur (1).

2. Dispositif malaxeur selon la revendication 1, **caractérisé en ce que** l'appendice (13), en particulier la surépaisseur (13), est réalisé en tant que moyen d'augmentation d'une section transversale du fouet (13, 15).

3. Dispositif malaxeur selon l'une quelconque des revendications précédentes, **caractérisé en ce que** les appendices (13), en particulier les surépaisseurs (13), sont agencés respectivement dans un secteur utile (16, 17) sur le fouet (11, 15) respectif de manière symétrique par rapport un axe de rotation (R) de l'arbre d'entraînement (10).

4. Dispositif malaxeur selon la revendication 3, **caractérisé en ce que** le secteur utile (16, 17) des fouets (11, 15) est réalisé de manière à rester en contact avec le mélange lors du fonctionnement du dispositif malaxeur (1).

5. Dispositif malaxeur selon l'une quelconque des revendications précédentes, **caractérisé en ce que** les fouets (11, 15) sont réalisés rigides.

6. Dispositif malaxeur selon l'une quelconque des revendications précédentes, **caractérisé en ce que** les fouets (11, 15) sont fabriqués à partir d'un matériau métallique.

7. Dispositif malaxeur selon l'une quelconque des revendications précédentes, **caractérisé en ce que** les appendices (13), en particulier les surépaisseurs (13), sont réalisés amovibles et/ou remplaçables.

8. Appareil malaxeur électrique à main comportant au moins un dispositif malaxeur selon l'une quelconque des revendications 1 à 7, l'appareil malaxeur à main présentant un dispositif d'entraînement électrique pour entraîner en rotation le au moins un dispositif malaxeur (1).
